# EUROPEAN PATENT APPLICATION

(11) **EP 1 249 917 A2**
(43) Date of publication of application: **16.10.2002**
(21) Application number: 02252452.4
(22) Date of filing: 05.04.2002
(51) Int. Cl.: H02K 1/02, H02K 3/02, H02K 15/02, H02K 15/00

(54) **Electric motor and its manufacturing method**

(30) Priority: 11.04.2001 US 833165
(71) Applicant: Meritor Light Vehicle Technology, LLC, Troy, Michigan 48084 (US)
(72) Inventor: Fowler, Craig Rae, Windsor, Ontario N9C 2A9 (CA); Quere, Jerome, 14112 Bieville-Beuville (FR); Kramer, Dennis, Troy, Michigan 48098 (US); Fin, Enrico, Lake Orion, Michigan 48359 (US); Chene, George, Sterling Heights, Michigan 48314 (US); Goldberg, Ira, Thousand Oaks, California 91360 (US); Chiu, Stephen, Thousand Oaks, California 91360 (US); Hopson, Charles, Lebanon, Tennessee 37087 (US); Garrido, Pascal, Gravehurst, Ontario P1P 1T8 (CA); Rogovin, Dan, Newbury Park, California 91320 (US); Barry, David, Warwickshire CV37 6DS (GB)
(74) Representative: Jones, John Bryn

(57) **Abstract**

A method of forming a relatively low cost motor (22) provides a motor rotor (26) and/or stator (24) which has a generally solid body (30). The core of the body is formed of a less conductive material, and a more conductive material is at circumferentially spaced locations (32) on the core. In one embodiment, the conductive material and the less conductive material are coextruded. In a second embodiment, the core material is formed by powdered metal technology, and the conductive material is deposited onto the core.

## Description

### BACKGROUND OF THE INVENTION

This invention relates to a motor and method of providing a motor for vehicle applications wherein the rotor and/or stator is formed of a solid body of material.

Vehicles have typically utilized DCpowered motors, which are relatively expensive and large. It would be desirable to utilize ACpowered motors. However, the power supplies typically utilized on vehicles are not sufficient to drive AC motors.

Recently, it has been proposed to increase the voltage supply on vehicles. With such a change, ACpowered motors may be more practical. However, to make AC motors more practical for high volume applications, it would be desirable to reduce the cost and complexity of manufacturing the motors.

Historically, motor components have been formed of a plurality of plates which are secured together. Typically, windings are then placed into spaces between teeth on the plates. This is somewhat expensive and complex.

### SUMMARY OF THE INVENTION

In a disclosed embodiment of this invention, the rotor and/or stator for an AC motor is formed of a solid body of material. The conductive portions are formed separately. The shaft may be formed separately. In one embodiment, an extruder extrudes two types of plastic, with one forming conductive portions and the other being an insulator separating the conductive portions. This then provides the necessary structure for the rotor. The stator may be formed in a similar fashion.

In another embodiment, powdered metal technology is utilized to form a motor rotor and/or stator core. The core includes circumferentially spaced teeth. A conductive material deposited in the spaces between the teeth to form the windings. Alternatively, standard windings can be wound between the teeth.

The present invention thus provides a relatively easy-to-manufacture and low cost AC motor. Most preferably this AC motor is utilized for vehicle applications.

These and other features of the present invention can be best understood from the following specification and drawings, the following of which is a brief description.

### BRIEF DESCRIPTION OF THE DRAWINGS

Figure 1 is a schematic view of a vehicle component.
Figure 2 is a cross-sectional view through a motor according to the present invention.
Figure 3 schematically shows a method of manufacture step for the Figure 2 embodiment.
Figure 4A shows a first step in the manufacture of a second embodiment.
Figure 4B shows a subsequent step.
Figure 4C shows another subsequent step.

### DETAILED DESCRIPTION OF A PREFERRED EMBODIMENT

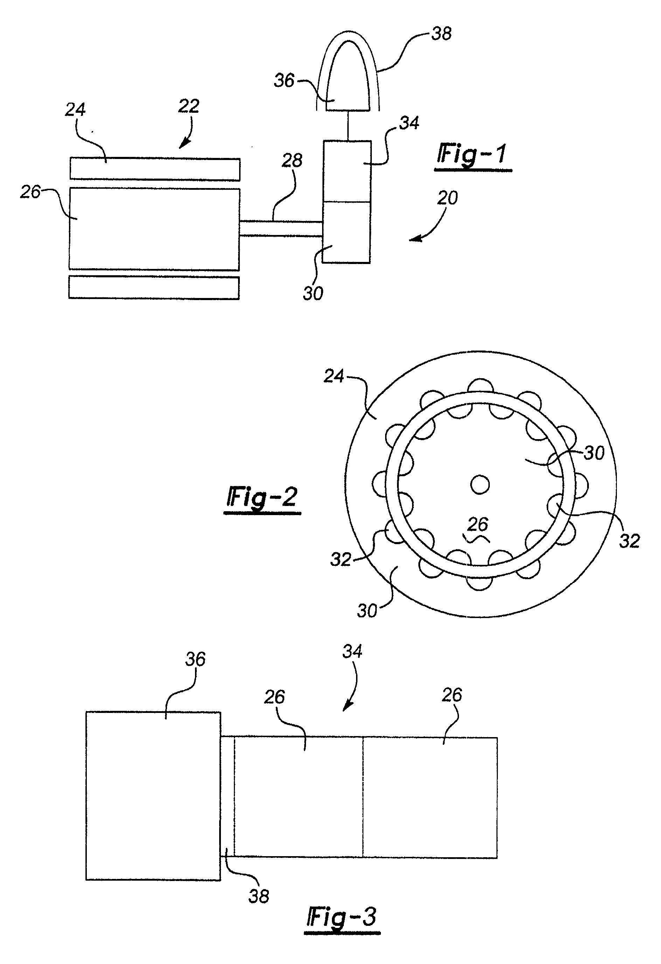

As shown in Figure 1, an assembly 20 includes an ACpowered motor 22 having a stator 24 and a rotor 26. The rotor 26 drives a shaft 28 which in turn drives the gear 30. The gear 30 is connected through a mechanism 34 to drive a closure member 36 within a frame 38. The closure member 36 could be a window, a sunroof, a moon roof, etc. While the present invention is shown with a motor for driving a vehicle closure 36, it should be understood that other motor applications such as moving seats, etc., would come within the scope of this invention.

As shown in Figure 2, the rotor 26 and the stator 24 are each formed to have a core 30 with circumferentially spaced conductive areas 32. The present invention manufactures these components such that the cores are generally solid bodies, replacing the separate plates of the prior art. In this embodiment, the rotor 26 and stator 24 are extruded by a twomaterial coextrusion. The portions 30 are formed of materials that have magnetic properties such as ferro plastics. Nylon 6/6 with iron powder is one preferred example. The core pieces 32 are preferably formed of conductive plastic. As an example, nylon filled with copper and/or aluminum could be utilized. Such components can be easily formed by known coextrusion technology.

Figure 3 is a schematic view of forming the rotors 26 with a co-extruder such as shown at 34. A coextruding machine 36 extrudes a strip 38 of the rotor material. The rotors 26 can then be cut to size. The stators can be made in a similar fashion. With the present invention, and the use of the coextrusion, the rotors can be manufactured much simpler and much less expensively.

Figure 4A shows another embodiment 40. In embodiment 40, the stator 42 has a plurality of spaced teeth 44. Similarly, the rotor 46 has a plurality of spaced teeth 48. As shown in Figure 4A, the first step in the manufacture is to form the core components by powdered metal technology. A worker in this art would be able to provide the appropriate powdered metal techniques for forming such a shaped part. Most preferably, a relatively low cost motor grade powder should be utilized.

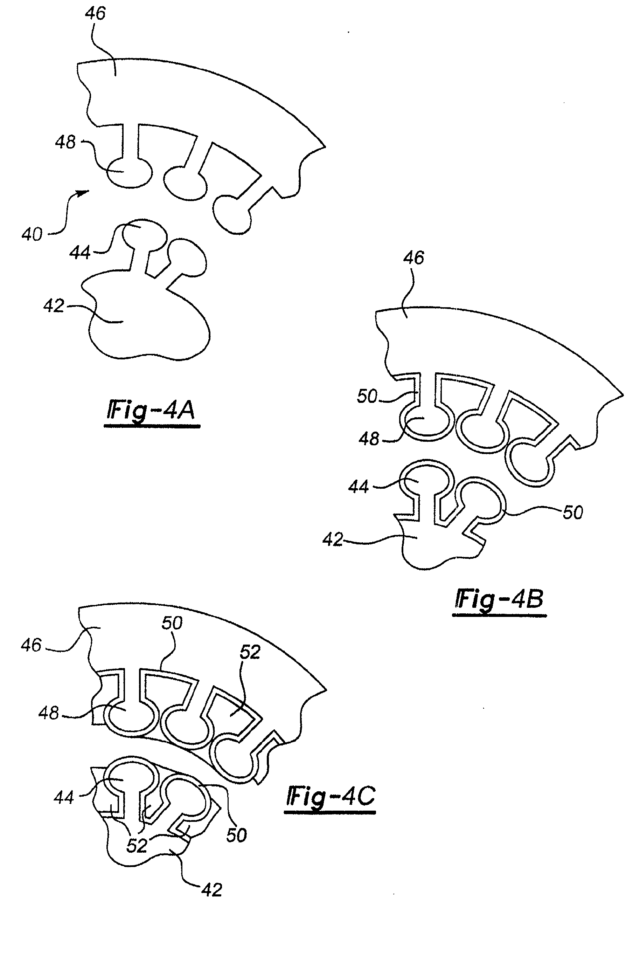

As shown in Figure 4B, the next step is to provide an insulation layer 50 around the teeth. Finally, as shown in Figure 4C, conductive material 52 is deposited between the teeth 44 or 48. The conductive material may be aluminum which is caused to flow into the spaces between the teeth. The shape and relative sizes of teeth 48 and material 52 is only shown as an example. Alternatively, standard windings can also be utilized.

With both embodiments, the rotor and/or stator are formed of generally integral core bodies. Conductive material is placed at the circumferentially spaced locations. The invention thus provides a relatively low cost AC motor. This facilitates the use of such motors in vehicle applications.

While preferred embodiments of this invention have been disclosed, a worker in this art would recognize that certain modifications would come within the scope of this invention. For that reason, the following claims should be studied to determine the true scope and content of this invention.

## Claims

1. A motor (22) comprising:
a stator body (24);
a rotor body (26); and
at least one of said stator and rotor bodies being formed of a generally solid core (30) of a first material and having a plurality of circumferentially spaced portions (32) at an outer peripheral surface, and a conductive material deposited into said portions which is more conductive than said first material.

2. A motor as set forth in Claim 1, wherein said motor is an AC powered motor.

3. A method of providing a motor comprising the steps of:
forming an electric motor (22) including a rotor (26) and a stator (24), with the formation of at least one of said rotor and said stator including the steps of forming a generally solid core body (30) of a less conductive first material, and having circumferentially spaced spaces (32), and depositing a more conductive second material into said spaces.

4. A vehicle component drive assembly comprising:
a vehicle component (36) which is to be moved;
an AC motor (22) for driving said component; and
said AC motor including a rotor (26) and a stator (24), with at least one of said rotor and said stator being formed of a core body (30) formed of a first material and circumferentially spaced conductive areas (32) which are more conductive than said first material.

5. A motor as set forth in Claim 1 or 2, or a method as set forth in claim 3 or a vehicle component drive assembly as set forth in Claim 4, wherein said core is formed of a first plastic and said conductive material is formed of a second plastic.

6. A motor or a method or a vehicle component drive assembly as set forth in any preceding claim, wherein said first and second plastics or materials are coextruded.

7. A motor or a method or a vehicle component drive assembly as set forth in Claim 6, wherein said coextruded material is cut to desired lengths.

8. A motor or a method or a vehicle component drive assembly as set forth in any preceding claim, wherein said core or solid body core is formed by powder metal technology.

9. A motor or a method or a vehicle component drive assembly as set forth in any preceding claim, wherein an insulating material (50) is placed at least around circumferentially spaced teeth (44, 48), and a conductive material (52) is then deposited between said teeth.
